(19) Europäisches Patentamt
European Patent Office
Office européen des brevets

(11) **EP 2 544 364 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(51) Int Cl.:
*H02K 11/00* *(2006.01)*   *H02P 23/14* *(2006.01)*
*G01L 3/00* *(2006.01)*   *G05D 17/02* *(2006.01)*

(21) Anmeldenummer: **11173249.1**

(22) Anmeldetag: **08.07.2011**

(54) **Momentenbeobachter auf der Basis der Messung von Ausgangsströmen und Ausgangsspannungen**

Torque observer on the basis of the measurement of output current and output voltages

Couplemètre basé sur la mesure du courant et de la tension de sortie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.01.2013 Patentblatt 2013/02**

(73) Patentinhaber: **Siemens Aktiengesellschaft 80333 München (DE)**

(72) Erfinder:
• **Fuchs, Enrico**
  **08141 Reinsdorf (DE)**
• **Götze, Thomas**
  **09113 Chemnitz (DE)**
• **Hellmich, Steffen**
  **09116 Chemnitz (DE)**
• **Köpken, Hans-Georg**
  **91056 Erlangen (DE)**
• **Völkel, Stefan**
  **91058 Erlangen (DE)**

(56) Entgegenhaltungen:
**US-A1- 2004 134 267     US-A1- 2008 300 827**

EP 2 544 364 B1

**Beschreibung**

Die vorliegende Erfindung betrifft ein Verfahren zum Schätzen eines Drehmoments eines mit einem Umrichter gespeisten, dreiphasigen Antriebsmotors für ein Fahrzeug, wobei drei Phasenleitungen von dem Umrichter zu dem Antriebsmotor führen. Darüber hinaus betrifft die vorliegende Erfindung eine entsprechende Antriebsvorrichtung für ein Fahrzeug.

Bei elektrischen Traktionsantrieben (z.B. im Falle eines Elektroautos) ist zur Sicherstellung der Spurstabilität zu gewährleisten, dass am Rad das von einer Fahrzeugsteuerung vorgegebene Solldrehmoment weitgehend richtig als Istdrehmoment umgesetzt wird. Durch einen Vergleich von Soll- und Istwert kann auf ein fehlerfreies Funktionieren des Antriebs und folglich auf die Einhaltung der Spurstabilität geschlossen werden. Die Ermittlung des Drehmoments ist damit ein wichtiges Sicherheitsmerkmal. Das Istdrehmoment sollte daher mit vom Ansteuerzweig, in dem Sollwerte von einer Regelelektronik geliefert werden, unabhängigen Betriebsmitteln bestimmt werden (Drehmomentenbeobachter).

Während der Sollwert des Drehmoments bekannt ist (direkt verfügbar aus den Regelungsalgorithmen einer Fahrsteuerung), ist das Istdrehmoment nur sehr aufwändig direkt messbar. Handelsübliche Drehmomentmesswellen können aus Platz-, Gewichts- und Kostengründen in keinem Fahrzeug verwendet werden. Statt einer Drehmomentmessung müssen deshalb Schätz- beziehungsweise Rechenverfahren eingesetzt werden, die auf Größen beruhen, welche auf einfacherem Wege messbar sind.

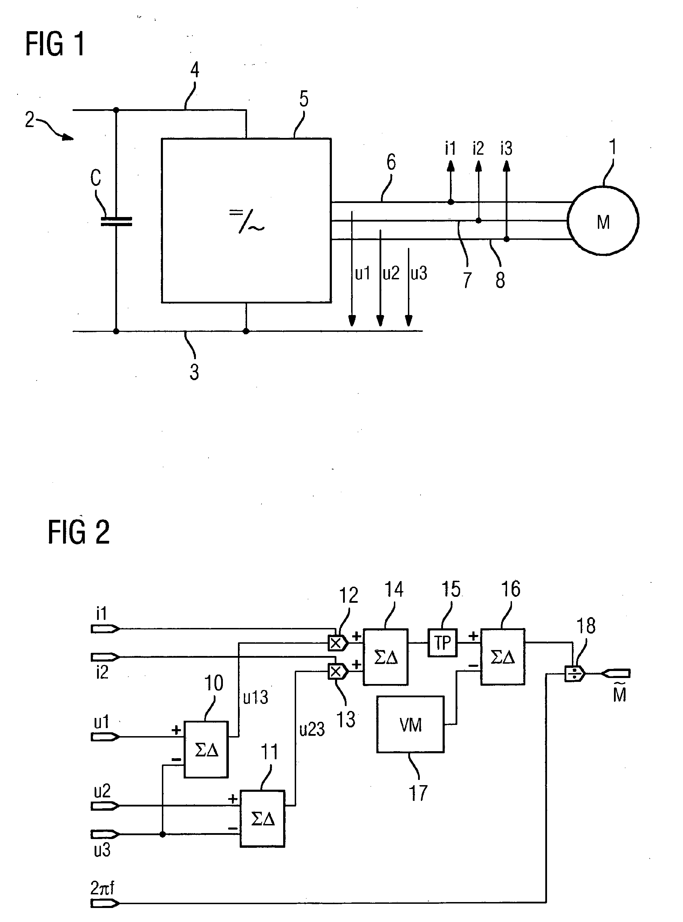

Für den elektrischen Antrieb von Fahrzeugen werden typischerweise Dreiphasenmotoren beziehungsweise Drehstrommotoren eingesetzt. Ein derartiger Drehstrommotor wird üblicherweise von einem Zwischenkreis über einen Umrichter angesteuert (vergleiche FIG 1). Der Umrichter wird von einer Regelelektronik beziehungsweise Regelung angesteuert.

Solange der Umrichter pulst und die Regelung arbeitet, kann man für die Momentenberechnung die Stromistwerte und die Spannungssollwerte verwenden. Dabei wird vorausgesetzt, dass die Spannungssollwerte einigermaßen korrekt in Istwerte umgesetzt werden.

Aus Spannungen und Strömen lässt sich die Augenblicksleistung des Umrichters ermitteln. Mit einem geeigneten Filter erhält man den Wirkanteil, der im Motor zum Großteil (die Ständer- und Läuferverluste sind abzuziehen) in mechanische Leistung umgesetzt wird. Diese Leistung P entspricht dann dem Drehmoment M multipliziert mit der Winkelgeschwindigkeit $2\pi \cdot n_{mech}$ gemäß der Formel:

$$M \approx \frac{P}{2\pi \cdot n_{mech}}$$

Das mechanische Drehmoment kann grundsätzlich auch entsprechend folgender Formel geschätzt werden:

$$\tilde{M} \approx \frac{P_\delta}{2\pi \cdot f}$$

Mit dieser zweiten Gleichung erhält man das Drehmoment einfacher, da sich die Drehfeldleistung $P_\delta$ einfacher bestimmen lässt (mittlere Wirkleistung des Umrichters abzüglich der Ständerverluste). Statt der mechanischen Drehzahl $n_{mech}$ kann die elektrische Ausgangsfrequenz f des Umrichters verwendet werden, die in der Regelung stets als Sollwert vorhanden ist.

Die Motorverluste (Ständer und Läufer) können ebenfalls mit entsprechenden Modellen aus den Messgrößen abgeleitet werden. Auch der Energieanteil in den Ständerinduktivitäten des Motors könnte so berücksichtigt werden.

Aus der Druckschrift GB 2 440 559 B ist die Kompensation einer Ausgangsspannungsabweichung bei einem Stromrichter bekannt. Dabei wird eine integrierende Spannungsmessung der drei Ausgangsspannungen durchgeführt. Diese wird durch einen $\Sigma$-$\Delta$-AD-Wandler realisiert.

In dem Dokument US 2008/0300827 A1 ist ein gattungsgemäßes Verfahren zum Schätzen eines Drehmoments eines Antriebsmotors beschrieben. Aus Eingangsspannungen und -strömen wird die Motorgeschwindigkeit bestimmt. Das Drehmoment der Motorwelle wird aus dem Luftspaltdrehmoment und Verlustleistungen bestimmt.

Darüber hinaus offenbart die Druckschrift US 2004/0134267 A1 ein Diagnosesystem für einen Elektromotor mit Hilfe einer Drehmomentschätzung. Der Motor wird zum Antrieb eines Fahrzeugs verwendet.

Die Aufgabe der vorliegenden Erfindung besteht darin, das Drehmoment eines Antriebs eines Fahrzeugs zuverlässiger schätzen zu können.

Erfindungsgemäß wird diese Aufgabe gelöst durch ein Verfahren nach Anspruch 1.

Darüber hinaus wird erfindungsgemäß bereitgestellt eine Antriebsvorrichtung nach Anspruch 9.

In vorteilhafter Weise wird also das Drehmoment des Antriebsmotors nicht aus Iststromstärken und Sollspannungen, sondern aus Iststromstärken und Istspannungen am Umrichterausgang ermittelt. Damit wird die Momentenschätzung deutlich verbessert und es sind auch Schätzungen möglich, wenn der Umrichter gesperrt ist.

In einer bevorzugten Ausführungsform werden die Spannungen an den drei Phasenleitungen mit einem $\Sigma$-$\Delta$-Verfahren gemessen. Ebenso können die Ströme in den drei Phasenleitungen mit einem $\Sigma$-$\Delta$-Verfahren gemessen werden. Derartige Messverfahren sind zuverlässig und lassen sich mit einfachen Mitteln realisieren.

Vorzugsweise wird für das Ermitteln des Schätzwerts ein Leistungswert als Summe eines ersten und eines zweiten Teilleistungswerts berechnet, wobei der erste Teilleistungswert dem Produkt aus der Stromstärke in der ersten Phasenleitung und einer ersten verketteten Spannung zwischen der ersten Phasenleitung und einer dritten der drei Phasenleitungen entspricht, und wobei der zweite Teilleistungswert dem Produkt aus der Stromstärke in der zweiten Phasenleitung und einer zweiten verketteten Spannung zwischen der zweiten Phasenleitung und der dritten Phasenleitung entspricht. Auf diese Weise lässt sich der Leistungswert aus nur fünf Werten des Dreiphasensystems ermitteln.

Der aus den Istströmen und Istspannungen gewonnene Leistungswert stellt eine Augenblicksleistung dar und kann mit einem Tiefpass gefiltert werden, um eine mittlere elektrische Wirkleistung des Umrichters zu erhalten. Damit erhält man eine aussagekräftige Basis für die Schätzung des Drehmoments.

Darüber hinaus kann ein Verlustleistungsmodell für Verluste in dem Antriebsmotor bereitgestellt werden, wobei zur Ermittlung einer Drehfeldleistung, aus der das Drehmoment geschätzt wird, eine mit dem Verlustleistungsmodell gewonnene Verlustleistung von der mittleren elektrischen Wirkleistung des Umrichters subtrahiert wird. Mit dem Verlustleistungsmodell können die Verluste im Ständer und Läufer des Motors sehr realistisch nachgestellt werden, so dass die tatsächliche Ausgangsleistung des Motors besser geschätzt werden kann.

Des Weiteren kann das Drehmoment auch dann geschätzt werden, wenn der Umrichter gesperrt ist. Dies hat den Vorteil, dass das Drehmoment auch dann geschätzt werden kann, wenn sich Umrichter und Motor nicht im normalen Betriebsmodus befinden.

Spannungsmessungen werden in einer Einschaltsequenz überprüft, in der der Umrichter so angesteuert wird, dass in allen drei Phasenleitungen die gleiche Spannung anliegt, so dass die in den Phasenleitungen gemessenen Stromstärken jeweils Null betragen. Durch diese Plausibilisierung kann sichergestellt werden, dass die Spannungen korrekt gemessen werden.

Darüber hinaus können die gemessenen zwei Stromstärken dadurch plausibilisiert werden, dass eine dritte Stromstärke in der dritten Phasenleitung gemessen wird, und die Summe der Stromstärken Null ergibt. Auf diese Weise lässt sich auch die Stromstärkenmessung eindeutig überprüfen.

Die vorliegende Erfindung wird nun anhand der beigefügten Zeichnungen näher erläutert, in denen zeigen:

FIG 1 einen Umrichter mit Motor und Kennzeichnung der gemessenen Größen;

FIG 2 ein Signalflussschema zum Berechnen des Drehmoments aus zwei Strömen und drei gemessenen Spannungen und

FIG 3 die Verarbeitung der Messgrößen in einer Recheneinheit.

Die nachfolgend näher geschilderten Ausführungsbeispiele stellen bevorzugte Ausführungsformen der vorliegenden Erfindung dar.

In FIG 1 ist schematisch eine Antriebsvorrichtung für ein elektrisch betriebenes Fahrzeug dargestellt. Die Antriebsvorrichtung besitzt einen Motor 1, der als Drehstrommotor ausgebildet ist. Gespeist wird der Motor 1 von einem Zwischenkreis 2, der durch einen Zwischenkreiskondensator C angedeutet ist. Bei dem Zwischenkreis 2 handelt es sich um ein Gleichspannungssystem mit einer Minusschiene 3 und einer Plusschiene 4. Ein an die Minusschiene 3 und die Plusschiene 4 angeschlossener Umrichter 5 wandelt einen Gleichstrom vom Zwischenkreis 2 in einen Dreiphasenstrom beziehungsweise Drehstrom für den Motor 1. Dazu sind drei Phasenleitungen vom Umrichter 5 zum Motor 1 gelegt: Eine erste Phasenleitung 6, eine zweite Phasenleitung 7 und eine dritte Phasenleitung 8. In der ersten Phasenleitung 6 wird ein Strom i1, in der zweiten Phasenleitung 7 ein Strom i2 und in der dritten Phasenleitung 8 ein Strom i3 gemessen. An der ersten Phasenleitung 6 liegt gegenüber der Minusschiene 3 eine Spannung u1, an der zweiten Phasenleitung 7 eine Spannung u2 und an der dritten Phasenleitung 8 eine Spannung u3 an.

Üblicherweise werden die Motorströme i1, i2 und i3 des Motors 1 direkt gemessen. Mindestens werden die Ströme in zwei Phasen gemessen, und der Strom in der dritten Phase wird daraus berechnet, denn die drei Ströme zusammen ergeben den Wert Null, solange kein Isolationsfehler vorliegt.

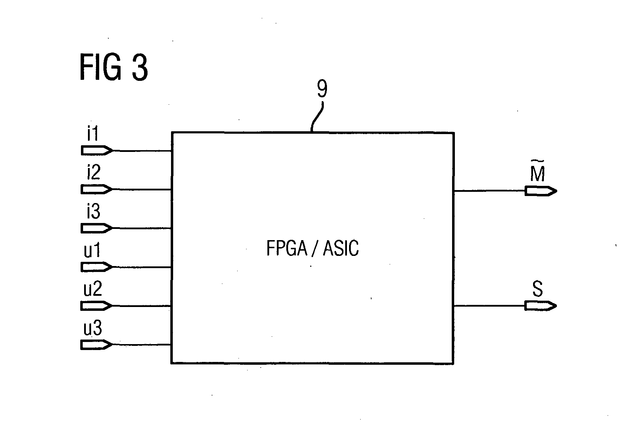

Aus der eingangs erwähnten Druckschrift GB 2 440 559 B, auf die hiermit explizit Bezug genommen wird, ist ein Verfahren bekannt, wie mithilfe eines Σ-Δ-Verfahrens (Sigma-Delta-Verfahren) die Ausgangsspannungen u1, u2 und u3 des Umrichters 5 gegenüber der Minusschiene 3 des Spannungszwischenkreises gemessen werden können. Durch das Σ-Δ-Verfahren liegen sämtliche Messwerte in digitaler Form als Σ-Δ-Datenströme vor und können in einem zentralen Logikbaustein 9 (z.B. FPGA) geeignet weiterverarbeitet werden (vergleiche FIG 3).

Mithilfe der Augenblickswerte der Ausgangsspannungen u1, u2 und u3 und der Augenblickswerte der Ausgangsströme i1, i2 und i3 kann das vom Motor 1 abgegebene Drehmoment M in der Recheneinheit 9 berechnet werden, selbst dann wenn der Umrichter 5 gesperrt ist oder die Sollspannungen aus anderen Gründen nicht korrekt umgesetzt werden können (z.B. Spannungszeitflächenfehler durch Totzeiteinflüsse und Durchlassspannungsabfälle beziehungsweise durch Erreichen der Aussteuergrenze, Ansprechen von Mindestpulsüberwachungen). In diesen Fällen stehen keine Sollspannungen zur Verfügung oder die Sollspannungen weichen aufgrund von Nicht-Linearitäten von den Istspannungen ab. Dann ist es nur möglich, auf der Basis der Istspannungen das Drehmoment sinnvoll zu schätzen.

FIG 2 zeigt exemplarisch anhand eines Signalflussplans die Berechnung der Augenblicksleitung aus den Strömen i1, i2 und den verketteten Spannungen u13 und u23. In dem konkreten Beispiel werden also die Ströme i1 und i2 in der ersten Phasenleitung 6 und der zweiten Phasenleitung 7 gemessen. Ebenso werden die Spannungen u1, u2 und u3 an der ersten Phasenleitung 6, der zweiten Phasenleitung 7 und der dritten Phasenleitung 8 gemessen und als Eingangsgrößen bereitgestellt. Aus den Strömen oder Spannungen lässt sich die elektrische Ausgangsfrequenz f ermitteln und eine entsprechende Winkelgeschwindigkeit $2\pi f$ bereitstellen.

Mithilfe eines ersten Subtrahierers 10 wird eine erste verkettete Spannung u13 durch Subtraktion der dritten Spannung u3 von der ersten Spannung u1 gewonnen. In gleicher Weise wird eine zweite verkettete Spannung u23 mithilfe eines zweiten Subtrahierers 11 durch Subtraktion der dritten Spannung u3 von der zweiten Spannung u2 gewonnen. In einem Multiplizierer 12 wird die verkettete Spannung u13 mit dem Strom i1 der ersten Phasenleitung 6 multipliziert. Ebenso wird die verkettete Spannung u23 in einem Multiplizierer 13 mit dem Strom i2 in der zweiten Phasenleitung 7 multipliziert. Die Produkte von beiden Multiplizierern 12 und 13 werden in einem Addierer 14 aufsummiert, und das Resultat stellt die Augenblicksleistung dar, die vom Umrichter zur Verfügung gestellt wird. Mit einem nachgeschalteten Tiefpass 15 wird aus der Augenblicksleistung die elektrische Wirkleistung des Umrichters 5 ermittelt. Von dieser Wirkleistung werden in einem Subtrahierer 16 die Verluste des Elektromotors (insbesondere die Ständerverluste) subtrahiert. Diese Verluste werden mithilfe eines Verlustleistungsmodells 17 bereitgestellt. Das Ausgangssignal des Subtrahierers 16 entspricht also der tatsächlichen Drehfeldleistung des Motors. Mithilfe eines Dividierers 18, mit dem die Drehfeldleistung durch die Winkelgeschwindigkeit $2\pi f$ des Umrichters dividiert wird, wird schließlich ein Schätzwert $\tilde{M}$ für das tatsächliche mechanische Drehmoment M des Motors erhalten.

Die für die Schätzung verwendeten Messgrößen werden also unabhängig von dem Ansteuerzweig, mit dem von der Regelelektronik Sollwerte für den Umrichter bereitgestellt werden, zur Verfügung gestellt. Aus Sicherheitsgründen sollten die Messgrößen auf Plausibilität geprüft werden können. Der Vergleich mit dem Sollmoment kann dann sowohl in dem Drehmomentenbeobachter als auch in der Ansteuereinrichtung erfolgen, und es kann eine zweikanalige Abschaltung in den sicheren Zustand eingeleitet werden.

Die Spannungsmessungen können in einer Einschaltsequenz überprüft werden. Dabei kann der Umrichter beispielsweise von der Regelelektronik mit einem Nullzeiger (000, 111) angesteuert werden, so dass keine verketteten Spannungen u13, u23 erzeugt werden. Dabei bedeutet der Nullzeiger 000 beispielsweise, dass alle Phasenleitungen 6, 7, 8 mit der Minusschiene 3 kurzgeschlossen sind, während bei dem Nullzeiger 111 sämtliche Phasenleitungen 6, 7 und 8 mit der Plusschiene 4 verbunden sind. Wenn nun keine verketteten Spannungen erzeugt werden, wird auch kein Strom fließen, aber die Spannungsmesskanäle werden ausgesteuert. Dies muss an den Spannungsmesselementen erkannt werden können.

Auch die Messung der Ströme sollte plausibilisiert werden können. Dies kann einfach dadurch realisiert werden, dass alle drei Ströme i1, i2 und i3 gemessen werden. Nur im störungsfreien Betrieb ist die Stromsumme Null. Andernfalls liegt ein Mess- oder Isolationsfehler vor.

Auch die Drehfeldfrequenz (Frequenz f des Drehfelds) lässt sich einfach überprüfen. Die Drehfeldfrequenz kann nämlich sowohl aus den gemessenen Strömen i1, i2, i3 als auch aus den gemessenen Spannungen u1, u2, u3 berechnet werden, indem zum Beispiel die zeitliche Ableitung des Winkels aus den jeweiligen Raumzeigern der Messgrößen bestimmt wird.

Eine mit dem oben dargestellten Verfahren erkannte und zu große Abweichung zwischen Soll- und Istwert oder auch die Überschreitung einer Maximalgrenze für den Drehmomentenschätzwert kann in der Recheneinheit 9 für die Einleitung weiterer Schutzmaßnahmen verwendet werden. Ein entsprechendes Signal s zur Auslösung einer Schutzreaktion kann von der Recheneinheit 9 bereitgestellt werden (vergleiche FIG 3). Beispielsweise kann so zur Erreichung eines drehmomentfreien Rades eine permanentmagneterregte Synchronmaschine im Feldschwächbetrieb kurzgeschlossen oder vom Umrichter getrennt werden.

In vorteilhafter Weise kann gemäß obigem Prinzip also eine $\Sigma$-$\Delta$-Ausgangsspannungsmessung genutzt werden, um das entwickelte Istdrehmoment zu berechnen. Der in der Recheneinheit 9 (z.B. Logikbaustein FPGA) sehr schnell durchzuführende Vergleich mit dem Solldrehmoment beziehungsweise mit fest einstellbaren Grenzwerten kann verwendet werden, um sehr schnell auf Fehler reagieren zu können. Dieses Verfahren arbeitet ohne Software, was zu einer schnellen und zuverlässigen Reaktion führt, auch wenn die Software oder Controller ein Fehlverhalten zeigen. Eine Drehzahlbestimmung über die elektrische Frequenz macht es auch unabhängig vom Drehgeber. So kann ein sehr hohes Sicherheitsniveau erreicht werden.

**Patentansprüche**

**1.** Verfahren zum Schätzen eines Drehmoments (M) eines mit einem Umrichter (5) gespeisten, dreiphasigen Antriebsmotors (1) für ein Fahrzeug, wobei drei Phasenleitungen (6,7,8) von dem Umrichter (5) zu dem Antriebsmotor (1) führen, durch

　　- Messen jeweils einer Stromstärke (i1,i2,i3) in mindestens einer ersten und einer zweiten der drei Phasenleitungen (6,7,8),

- Messen jeweils einer Spannung (u1,u2,u3) an den drei Phasenleitungen, und
- Ermitteln einer Drehfeldfrequenz (f) aus den gemessenen Stromstärken oder den gemessenen Spannungen,

**gekennzeichnet durch**

- Ermitteln eines Schätzwerts ($\tilde{M}$) für das Drehmoment (M) aus den gemessenen Stromstärken, den gemessenen Spannungen und der ermittelten Drehfeldfrequenz, wobei
- Spannungsmessungen (u1,u2,u3) in einer Einschaltsequenz überprüft werden, in der der Umrichter (5) so angesteuert wird, dass in allen drei Phasenleitungen (6,7,8) die gleiche Spannung anliegt, so dass in den Phasenleitungen (6,7,8) gemessene Stromstärken (i1,i2,i3) jeweils Null betragen und dabei gemessen wird, dass keine verketteten Spannungen (u13,u23,u12) erzeugt werden.

2. Verfahren nach Anspruch 1, wobei die Spannungen (u1,u2, u3) an den drei Phasenleitungen (6,7,8) mit einem Sigma-Delta Verfahren gemessen werden.

3. Verfahren nach Anspruch 1 oder 2, wobei die Ströme (i1, i2,i3) in den drei Phasenleitungen (6,7,8) mit einem Sigma-Delta Verfahren gemessen werden.

4. Verfahren nach einem der vorhergehenden Ansprüche, wobei für das Ermitteln des Schätzwerts ($\tilde{M}$) ein Leistungswert als Summe eines ersten und eines zweiten Teilleistungswerts berechnet wird, wobei der erste Teilleistungswert dem Produkt aus der Stromstärke (i1) in der ersten Phasenleitung (6) und einer ersten verketteten Spannung (u13) zwischen der ersten Phasenleitung und einer dritten (8) der drei Phasenleitungen entspricht und wobei der zweite Teilleistungswert dem Produkt aus der Stromstärke (i2) in der zweiten Phasenleitung (7) und einer zweiten verketteten Spannung (u23) zwischen der zweiten Phasenleitung und der dritten Phasenleitung entspricht.

5. Verfahren nach Anspruch 4, wobei der Leistungswert mit einem Tiefpass (15) gefiltert wird, um eine mittlere elektrische Wirkleistung des Umrichters (5) zu erhalten.

6. Verfahren nach Anspruch 5, wobei ein Verlustleistungsmodell (17) für Verluste in dem Antriebsmotor (1) bereitgestellt wird, und zur Ermittlung einer Drehfeldleistung, aus der das Drehmoment ($\tilde{M}$) geschätzt wird, eine mit dem Verlustleistungsmodell gewonnene Verlustleistung von der mittleren elektrischen Wirkleistung des Umrichters subtrahiert wird.

7. Verfahren nach einem der vorhergehenden Ansprüche, wobei das Drehmoment auch dann gemäß einem der vorhergehenden Ansprüche geschätzt wird, wenn bei einer Regelung des Umrichters(5) keine Sollspannungen zur Verfügung stehen oder die Sollspannungen aufgrund von Nicht-Linearitäten von den gemessenen Spannungen (u1,u2,u3) abweichen.

8. Verfahren nach einem der vorhergehenden Ansprüche, wobei die gemessenen zwei Stromstärken (i1,i2) dadurch plausibilisiert werden, dass eine dritte Stromstärke (i3) in der dritten Phasenleitung (8) gemessen wird, und die Summe der drei Stromstärken Null ergibt.

9. Antriebsvorrichtung für ein Fahrzeug mit

- einem Umrichter (5),
- einem dreiphasigen Antriebsmotor (1),
- drei Phasenleitungen (6, 7, 8) von dem Umrichter zu dem Antriebsmotor, über die der Antriebsmotor gespeist wird,
- einer Strommesseinrichtung zum Messen jeweils einer Stromstärke (i1, i2, i3) in mindestens zwei der Phasenleitungen,
- einer Spannungsmesseinrichtung zum Messen jeweils einer Spannung (u1,u2,u3) an den drei Phasenleitungen, und
- eine Recheneinrichtung zum Ermitteln einer Drehfeldfrequenz aus den gemessenen Stromstärken oder den gemessenen Spannungen,

**gekennzeichnet durch**

- eine Schätzeinrichtung zum Ermitteln eines Schätzwerts ($\tilde{M}$) für das Drehmoment aus den gemessenen Stromstärken, den gemessenen Spannungen und der ermittelten Drehfeldfrequenz und
- Mittel, die dazu ausgebildet sind, dass Spannungsmessungen (u1,u2,u3) in einer Einschaltsequenz überprüft werden, in der der Umrichter (5) so angesteuert wird, dass in allen drei Phasenleitungen (6,7,8) die gleiche Spannung anliegt, so dass in den Phasenleitungen (6,7,8) gemessene Stromstärken (i1,i2,i3) jeweils Null betragen und dabei gemessen wird, dass keine verketteten Spannungen (u13, u23, u12) erzeugt werden.

**Claims**

1. Method for estimating a torque (M) of a three-phase drive motor (1) for a vehicle, which is supplied with power by a converter (5), with three phase lines (6,7,8) leading from the converter (5) to the drive motor (1), by means of

- measuring a current strength (i1,i2,i3) in each case in at least a first and a second of the three phase lines (6,7,8),
- measuring a voltage (u1,u2,u3) in each case at the three phase lines, and
- determining a rotating field frequency (f) from the measured current strengths or the measured voltages,

**characterised by**

- determining an estimated value ($\tilde{M}$) for the torque (M) from the measured current strengths, the measured voltages and the determined rotating field frequency, wherein
- measured voltages (u1,u2,u3) are verified in a switch-on sequence in which the converter (5) is controlled such that the same voltage is applied in all three phase lines (6,7,8), so that the current strengths (i1,i2,i3) measured in the phase lines (6,7,8) are each zero and it is thus measured, that no line-to-line voltages (u13,u23,u12) are generated.

2. Method according to claim 1, wherein the voltages (u1,u2,u3) are measured at the three phase lines (6,7,8) using a sigma-delta method.

3. Method according to claim 1 or 2, wherein the currents (i1,i2,i3) are measured in the three phase lines (6,7,8) using a sigma-delta method.

4. Method according to one of the preceding claims, wherein a power value is calculated as a sum of a first and of a second partial power value for determining the estimated value ($\tilde{M}$), wherein the first partial power value corresponds to the product of the current strength (i1) in the first phase line (6) and a first line-to-line voltage (u13) between the first phase line and a third (8) of the three phase lines and wherein the second partial power value corresponds to the product of the current strength (i2) in the second phase line (7) and a second line-to line voltage (u23) between the second phase line and the third phase line.

5. Method according to claim 4, wherein the power value is filtered using a low-pass filter (15) in order to obtain an average electrical active power of the converter (5).

6. Method according to claim 5, wherein a power loss model (17) for losses is provided in the drive motor (1), with a power loss obtained using the power loss model being subtracted from the average electrical active power of the converter to determine a rotating field power from which the torque ($\tilde{M}$) is estimated.

7. Method according to one of the preceding claims, wherein the torque is estimated according to one of the preceding claims even if when the converter (5) is controlled no target voltages are available or the target voltages differ from the measured voltages (u1,u2,u3) due to non-linearities.

8. Method according to one of the preceding claims, wherein the measured two current strengths (i1,i2) are verified by measuring a third current strength (i3) in the third phase line (8), the sum of the three current strengths coming to zero.

9. Drive apparatus for a vehicle having

- a converter (5),
- a three-phase drive motor (1),
- three phase lines (6,7,8) from the converter to the drive motor, via which the drive motor is supplied with power,
- a current measuring unit for measuring a current strength (i1,i2,i3) in each case in at least two of the phase lines,
- a voltage measuring unit for measuring a voltage (u1,u2,u3) in each case at the three phase lines,
- a calculation unit for determining a rotating field frequency from the measured current strengths or the measured voltages,

**characterised by**

- an estimation unit for determining an estimated value ($\tilde{M}$) for the torque from the measured current strengths, the measured voltages and the determined rotating field frequency and
- means, which are embodied such that measured voltages (u1,u2,u3) are verified in a switch-on sequence in which the converter (5) is controlled such that the same voltage is applied in all three phase lines (6,7,8), so that the current strengths (i1,i2,i3) measured in the phase lines (6,7,8) are each zero and it is thus measured, that no line-to-line voltages (u13,u23,u12) are generated.

**Revendications**

1. Procédé d'estimation d'un couple ( M ) de rotation d'un moteur ( 1 ) de traction d'un véhicule triphasé et alimenté par un convertisseur, dans lequel trois lignes ( 6, 7, 8 ) de phase vont du convertisseur ( 5 ) au moteur ( 1 ) de traction, par

- mesure respectivement d'une intensité ( i1, i2, i3 ) du courant dans au moins une première et une deuxième des trois lignes ( 6, 7, 8 ) de phase,
- mesure respectivement d'une tension ( u1, u2, u3 ) sur les trois lignes de phase et
- détermination d'une fréquence ( f ) de champ tournant à partir des intensités de courant mesurées ou des tensions mesurées,

**caractérisé par**

- détermination d'une valeur ($\tilde{M}$) d'estimation du couple ( M ) de rotation à partir des intensités de courant mesurées, des tensions mesurées et de la fréquence de champ tournant déterminée, dans lequel
- on contrôle des mesures ( u1, u2, u3 ) de tension dans une séquence de mise en circuit, dans laquelle le convertisseur ( 5 ) est commandé, de manière à ce que la même tension soit appliquée à toutes les trois lignes ( 6, 7, 8 ) de phase, de façon à ce que les intensités ( i1, i2, i3 ) de courant mesurées dans les lignes ( 6, 7, 8 ) de phase soient respectivement nulles et ainsi il est mesuré qu'il n'est pas produit de tension ( u13, u23, u12 ) d'interconnexion.

2. Procédé suivant la revendication 1, dans lequel on mesure les tensions ( u1, u2, u3 ) sur les trois lignes ( 6, 7, 8 ) de phase par un procédé sigma-delta.

3. Procédé suivant la revendication 1 ou 2, dans lequel on mesure les courants ( i1, i2, i3 ) dans les trois lignes ( 6, 7, 8 ) de phase par un procédé sigma-delta.

4. Procédé suivant l'une des revendications précédentes, dans lequel, pour la détermination de la valeur ($\tilde{M}$) estimée, on calcule une valeur de puissance comme somme d'une première et d'une deuxième valeurs de puissance partielle, la première valeur de puissance partielle correspondant au produit de l'intensité ( i1 ) du courant dans la première ligne ( 6 ) de phase par une première tension ( u13 ) d'interconnexion entre la première ligne de phase et une troisième ( 8 ) des trois lignes de phase et la deuxième valeur de puissance partielle correspondant au produit de l'intensité ( i2 ) du courant dans la deuxième ligne ( 7 ) de phase par une deuxième tension ( u23 ) d'interconnexion entre la deuxième ligne de phase et la troisième ligne de phase.

5. Procédé suivant la revendication 4, dans lequel on filtre la valeur de puissance par un passe bas ( 15 ) pour obtenir une puissance électrique active moyenne du convertisseur ( 5 ).

6. Procédé suivant la revendication 5, dans lequel on prépare un modèle ( 17 ) de perte de puissance pour des pertes dans le moteur ( 1 ) de traction, et, pour la détermination d'une puissance de champ tournant à partir de laquelle le couple ($\tilde{M}$) de rotation est estimé, on soustrait une perte de puissance, obtenue par le modèle de perte de puissance, de la puissance électrique active moyenne du convertisseur.

7. Procédé suivant l'une des revendications précédentes, dans lequel on estime le couple de rotation suivant l'une des revendications précédentes, même lorsque l'on ne dispose pas, lors d'une régulation du convertisseur ( 5 ), de tension de consigne ou lorsque les tensions de consigne s'écartent, en raison d'absence de linéarité, des tensions ( u1, u2, u3 ) mesurées.

8. Procédé suivant l'une des revendications précédentes, dans lequel on rend vraisemblables les deux intensités ( i1, i2 ) de courant mesurées, en mesurant une troisième intensité ( i3 ) de courant dans la troisième ligne ( 8 ) de phase, et lorsque la somme des trois intensités de courant est nulle.

9. Dispositif de traction d'un véhicule comprenant

- un convertisseur ( 5 ),
- un moteur ( 1 ) de traction triphasé,
- trois lignes ( 6, 7, 8 ) de phase, allant du convertisseur au moteur de traction et par lesquelles le moteur de traction est alimenté,
- un dispositif de mesure du courant pour la mesure respectivement d'une intensité (i1, i2, i3 ) de courant dans au moins deux des lignes de phase,
- un dispositif de mesure de la tension pour la mesure respectivement d'une tension ( u1, u2, u3 ) sur les trois lignes de phase et
- un dispositif informatique pour la détermination d'une fréquence de champ tournant à partir des intensités de courant mesurées ou des tensions mesurées,

**caractérisé par**

- un dispositif d'estimation, pour la détermination d'une valeur ($\tilde{M}$) estimée du couple de rotation à partir des intensités de courant mesurées et des tensions mesurées et de la fréquence de champ tournant déterminée et
- des moyens, qui sont constitués pour contrôler des mesures ( u1, u2, u3 ) de tension dans une séquence de mise en circuit, dans laquelle le convertisseur ( 5 ) est commandé, de manière à ce que la même tension s'applique à toutes les trois lignes ( 6, 7, 8 ) de phase, de façon à ce que les intensités (i1, i2, i3 ) de courant mesurées dans les lignes ( 6, 7, 8 ) de phase soient respectivement nulles et qu'il soit ainsi mesuré que des tensions ( u13, u23, u12 ) d'interconnexion ne sont pas produites.

FIG 1

FIG 2

# FIG 3

9

i1

i2

i3

u1

u2

u3

FPGA / ASIC

$\tilde{M}$

S

**IN DER BESCHREIBUNG AUFGEFÜHRTE DOKUMENTE**

**In der Beschreibung aufgeführte Patentdokumente**

- GB 2440559 B
- US 20080300827 A1
- US 20040134267 A1